Europäisches Patentamt

European Patent Office

Office européen des brevets

(19)

(11) Publication number: **0 189 487 B1**

# EUROPEAN PATENT SPECIFICATION

(45) Date of publication of patent specification: **21.11.91**

(51) Int. Cl.⁵: **G05B 19/405**, G06F 3/14, G06F 9/06, G06F 11/22

(21) Application number: **85904142.8**

(22) Date of filing: **16.08.85**

(86) International application number:
**PCT/JP85/00456**

(87) International publication number:
**WO 86/01316 (27.02.86 86/05)**

(54) **METHOD OF AUTOMATICALLY FORWARDING DISPLAY PICTURES.**

(30) Priority: **16.08.84 JP 170777/84**

(43) Date of publication of application:
**06.08.86 Bulletin 86/32**

(45) Publication of the grant of the patent:
**21.11.91 Bulletin 91/47**

(84) Designated Contracting States:
**DE FR GB**

(56) References cited:
**EP-A- 0 060 891**
**EP-A- 0 115 543**
**JP-A- 5 719 809**
**JP-A-53 147 181**
**JP-B- 548 419**

**NC-PRAXIS, no. 1, June 1983, pages 94-96,
Landsberg, DE; F.-W. HELLWIG et al.: "Neuer
Trend NC-Grafik"**

(73) Proprietor: **FANUC LTD.**
**3580, Shibokusa Aza-Komanba Oshinomura
Minamitsuru-gun, Yamanashi 401-05(JP)**

(72) Inventor: **MATSUMURA, Teruyuki**
**Matsugaya 38-8 Hachioji-shi
Tokyo 192-03(JP)**

(74) Representative: **Billington, Lawrence Emlyn et
al
HASELTINE LAKE & CO Hazlitt House 28
Southampton Buildings Chancery Lane
London WC2A 1AT(GB)**

## Description

This invention relates to a method of diagnosing an automatic programming system for creating NC data.

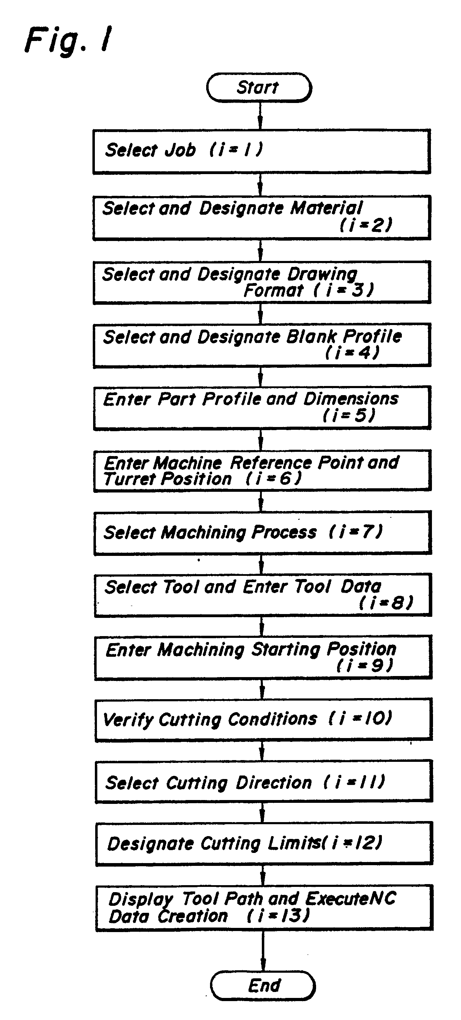

Automatic programming systems have come into practical use and are utilized to create NC tapes from a design drawing through a simple operation by entering data in a conversational mode using a graphic display screen. With such an automatic programming system, a machining profile can be entered merely by pressing profile symbol keys, which are located on an operator's panel, corresponding to a workpiece profile written on a design drawing. Further, according to the automatic programming system, reference information is graphically displayed on the screen from time to time and prompts are made in ordinary language, so that dimensions and various data can be entered in response to the prompts. When all data necessary for creation of an NC tape have been entered, the system immediately displays graphically the blank profile and the machined profile (finished profile), begins automatic calculation of NC command data and graphically displays a tool path to create an NC tape. As shown in Fig. 1, a previously proposed programming method performed by such an automatic programming system comprises the following steps:

(1) job selection step;
(2) blank material selection step
(3) drawing format selection step;
(4) blank profile and blank profile dimensions input step;
(5) part profile and part profile dimensions input step;
(6) machine reference point and turret position input step;
(7) machining process selection step;
(8) tool selection and tool data input step;
(9) machining starting position input step;
(10) cutting condition determination step;
(11) cutting direction input step;
(12) cutting limits input step; and
(13) tool path calculation step.

A question conforming to each step is displayed on the display unit and NC data are created by successively entering the necessary data while viewing the display. When the entry of data at each step is completed, an operation is performed to move to the next step. In a case where a data input function which relies upon soft keys is provided, the operation comprises advancing to the next step by pressing a key corresponding to a display region on the display screen that displays the message "NEXT PAGE". If no soft key is provided, the operation comprises advancing to the next step by pressing an R0 key on the keyboard.

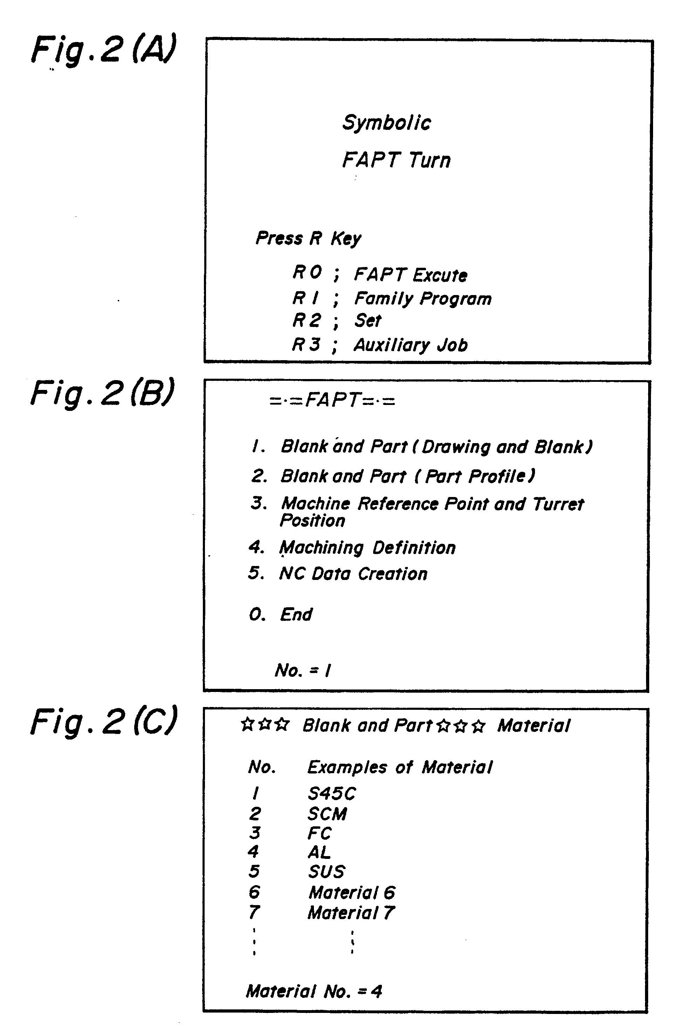

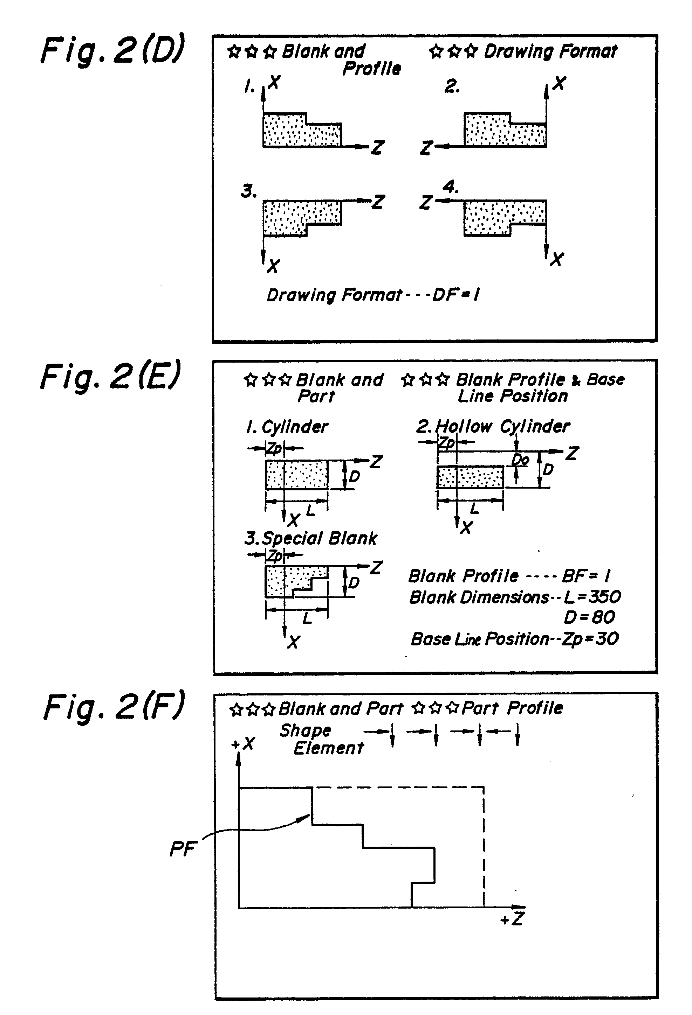

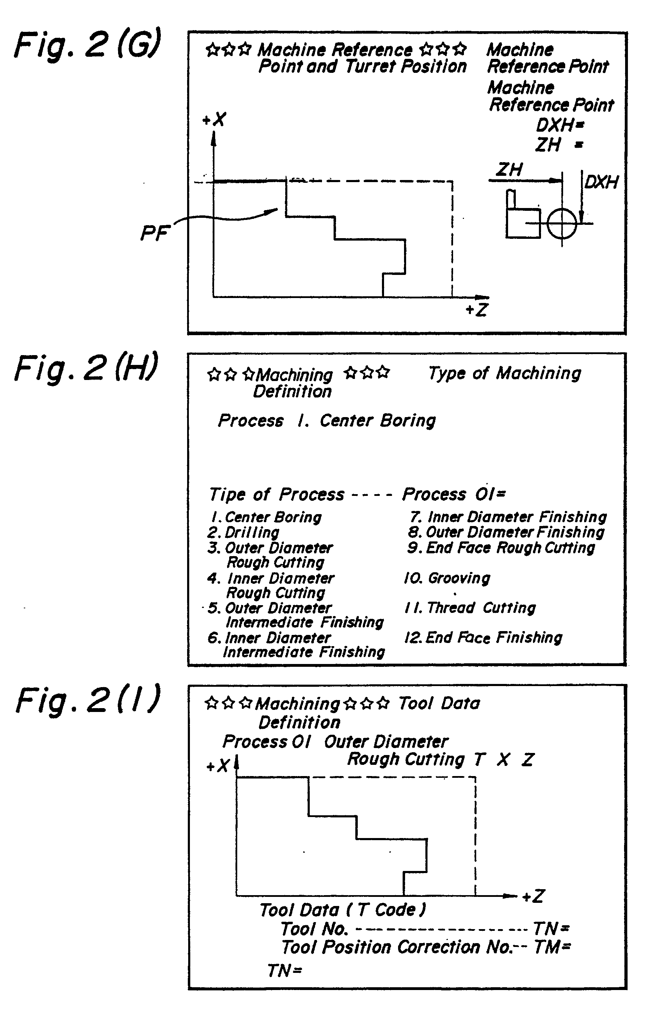

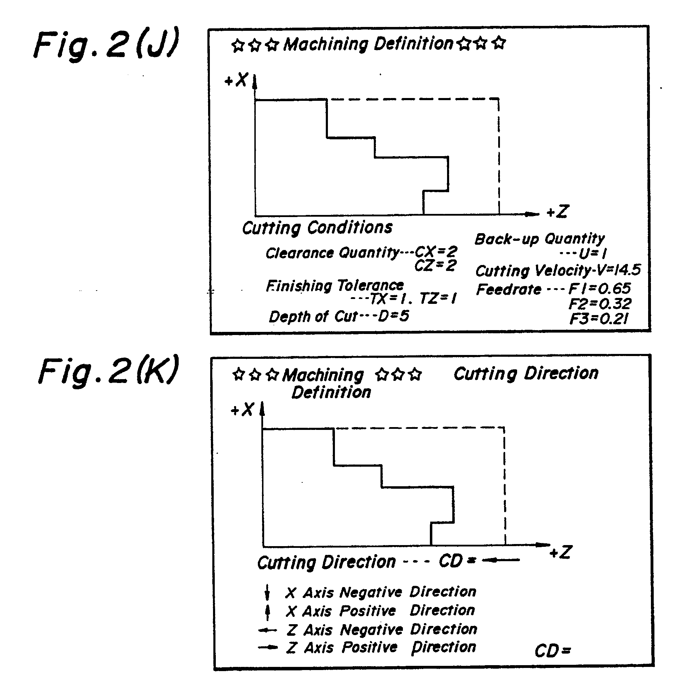

Fig. 2(A) shows an initially displayed frame, (B) a job step selection frame, (C) a material selection frame, (D) a drawing format selection frame, (E) a blank profile selection frame, (F) a part profile and dimensions input frame (a frame in which shape element symbols SB and a part profile PF are displayed based on entered profile and dimension data), (G) a machine reference point and data input frame (a frame in which the part profile PF entered at the previous step is displayed), (H) a machining process selection frame, (I) a tool selection and tool data input frame, (J) a cutting condition confirmation frame, and (K) a cutting direction selection frame.

An automatic programming system must be diagnosed to determine whether it is operating normally before being shipped or prior to starting an automatic programming operation. In an automatic programming system, a previously proposed method of performing diagnosis involves storing a data file (referred to as a "family program") in a non-volatile memory such as a CMOS in advance, the data file being a collection of data entered at each step of automatic programming, performing automatic programming processing by using the data of each step contained in the family program without entering the data from the keyboard one item at a time when diagnosis is made, and performing a parity check in concurrence with the automatic programming processing. More specifically, when performing diagnosis, the family program is called from the non-volatile memory to a RAM, the data corresponding to each step are subsequently extracted from the family program data, these data are used to form and display a picture corresponding to each step, and a soft key or the R0 key provided on the keyboard is then pressed to advance to the next step. Thereafter, the same processing is performed to advance the steps of the automatic programming operation. In concurrence with this processing, the data fetched from the RAM and a ROM are subjected to a parity check and, if a parity error occurs, an alarm is issued to indicate that a malfunction has developed in the system.

With this previously proposed method, however, the operator must press the soft key or the R0 key to advance to each subsequent step. This is inconvenient because the diagnostic processing cannot be executed automatically.

Accordingly, an object of the present invention is to provide a method of automatically advancing a displayed picture whereby each subsequent step can be shifted-to automatically without pressing any soft key or R0 key, thus enabling the system to be diagnosed automatically.

According to the present invention there is provided a method of diagnosing an automatic programming system which includes ROM and RAM as program memory and data memory and is operable to display on a display unit a predetermined sequence of pictures conforming to respective steps of a plurality of data input steps performed by an operator in response to the pictures when the system is in normal operation, the system being operable to create NC data employing the input data; wherein the diagnostic method comprises storing beforehand a data file suitable as said input data to create said NC data, entering an automatic picture advance command to select diagnostic processing, creating and displaying said pictures in accordance with said predetermined sequence automatically employing said data file, executing parity check processing for data read from said ROM and RAM to diagnose the memory, displaying a parity error when a parity error occurs, checking whether a picture display time t has exceeded a preset time Ts when no parity error occurs, creating and displaying the next picture in accordance with said predetermined sequence when the display time t has exceeded the preset time Ts, and executing the parity check processing repeatedly for the succession of displayed pictures.

The present invention provides a method of automatically advancing a displayed picture in an automatic programming system for displaying pictures conforming to respective steps of a plurality of data input steps on a display unit in a predeterimined sequence, and creating NC data by using data entered by referring to each picture. The method includes storing data groups as a family program in a non-volatile memory in advance, the data groups being entered at each step of automatic programming required to create NC data.

Next, the family program is read from the non-volatile memory to a RAM, after which an automatic advance command is applied as an input. Diagnostic processing is selected by the above operation.

When the automatic advance command is applied, a timer begins clocking time, a display picture for a predetermined step is created at predetermined times by using a question picture and family program data, and the display picture is changed over and displayed at predetermined times.

In concurrence with this processing, a parity check is performed with respect to data read out of a RAM, ROM and the like to diagnose a device, particularly a memory.

Brief Description of the Drawings

Fig. 1 is an overall flowchart of data input processing in automatic programming;
Fig. 2 is a view for describing a displayed picture associated with each step of automatic programming;
Fig. 3 is a block diagram of an automatic programming system;
Fig. 4 is a flowchart of processing according to the present invention;
Fig. 5 is a family program name input picture;
Fig. 6 is an automatic advance command input picture; and
Fig. 7 is a parity error display picture.

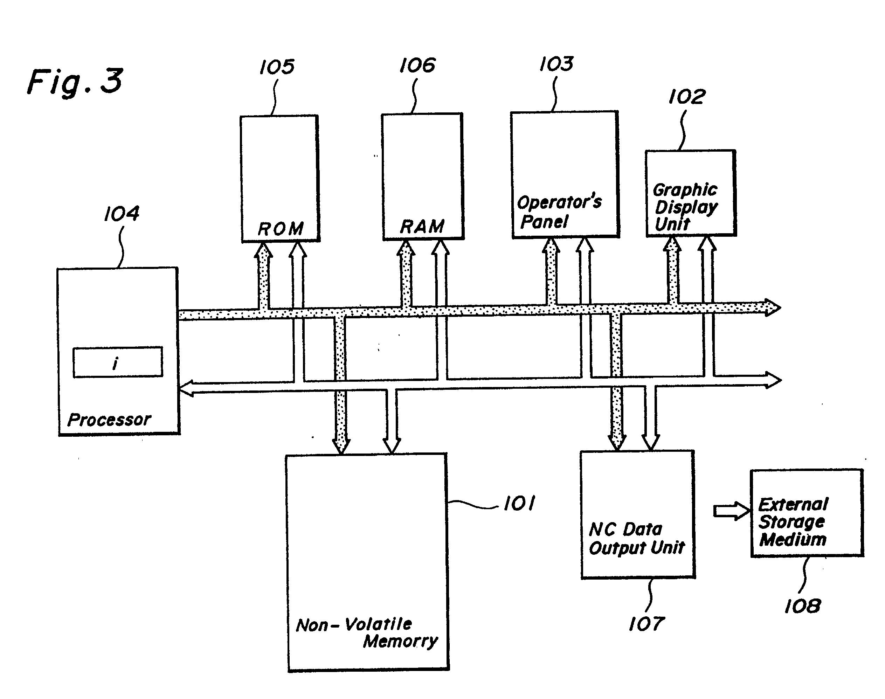

Fig. 3 is a block diagram of an automatic programming system which may employ a diagnosing method according to the present invention. Numeral 101 denotes a non-volatile memory storing various material files, tooling files, family programs and parameters. Numeral 102 designates a graphic display unit, 103 an operator's panel (keyboard), 104 a processor, 105 a ROM storing a control program, 106 a RAM for storing data entered from the operator's panel 103, the results of processing and created NC data, and 107 an NC data output unit for delivering created NC data to an external storage medium 108 such as a paper tape or bubble cassette. The keyboard 103 is provided with various status setting keys, job designating keys (R0 through R3 keys), a group of keys used in executing the four arithmatical operations as well as functional operations, and a group of keys for inputting part profiles, numerical values and letters of the alphabet. These keys, however, are not shown. Among the job designating keys, the R0 key is for designating the start of automatic programming and a shift to the next step, and the R3 key is for selecting an auxiliary job when entering an automatic advance command.

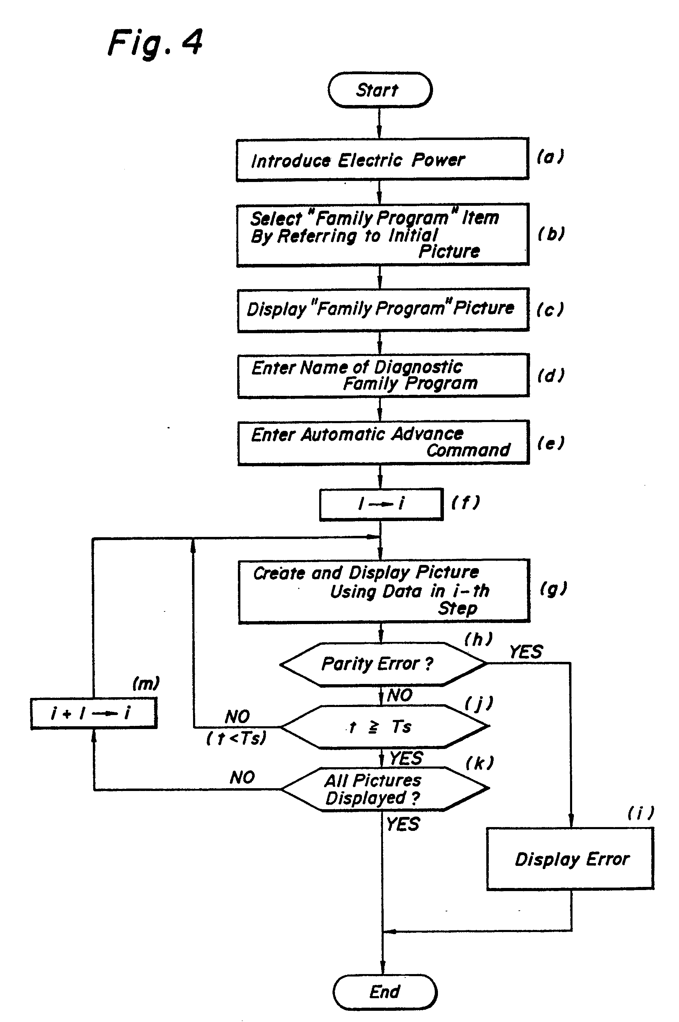

Fig. 4 is a flowchart of processing illustrating the method of the present invention.

(a) An initial picture shown in Fig. 2(A) is automatically displayed on the CRT of the graphic display unit 102 by turning on a power supply switch. Note that the initial picture is displayed on the CRT by pressing a prescribed key on the keyboard 103 at times other than when the power supply is switched on.

(b) While the initial picture is being displayed, the jog designating key R1 on the keyboard 103 is pressed to select the "FAMILY PROGRAM" item.

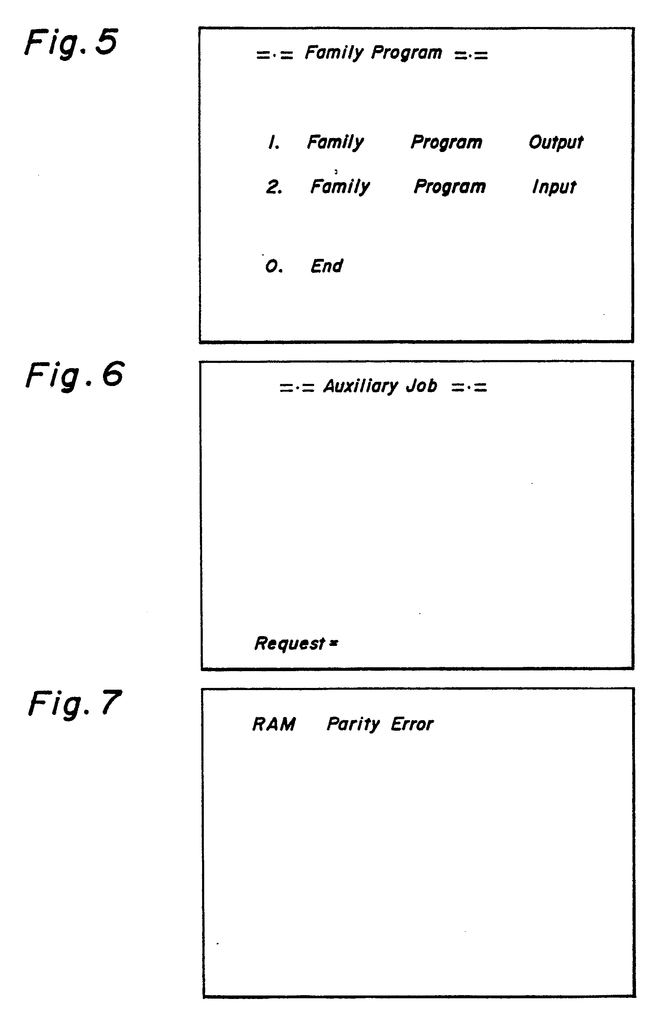

(c) A "FAMILY PROGRAM" input picture shown in Fig. 5 is displayed on the CRT by selecting the family program item.

(d) Next, a 2 key and an NL key on the keyboard 103 are pressed, followed by entering the name of a family program for diagnosis. When this is done, the family program is transferred from the non-volatile memory 101 to the RAM 106. Next, when a 0 key and the NL key are pressed, the initial picture is again displayed on the CRT.

(e) In this state, the command for automatically advancing the display picture is entered. This automatic advance command entails selecting the "AUXILIARY JOB" item by pressing the R3 key, displaying several auxiliary job names on the CRT together with menu numbers, and entering a menu number corresponding to the name of an auxiliary job which is the object of the automatic advance, the menu number being entered by operating a key on the keyboard. It is also possible to adopt an arrangement in which, by selecting "AUXILIARY JOB", a prompt

REQUEST =

is displayed on the CRT, as shown in Fig. 6, and an automatic advance command "LOOP" is entered directly from the keyboard 103.

Diagnostic processing is thus selected by the foregoing operations.

(f) The processor 104 of the automatic programming system performs the operation

$$l \rightarrow i$$

and initiates timekeeping.

(g) Thereafter, data of an i-th step are extracted from the family program for diagnosis read into the RAM 106, a display picture for the i-th step is created by using these data, and the display picture is displayed on the CRT of the graphic display unit 102 for a predetermined time. The picture displayed on the CRT is that shown in Fig. 2, by way of example. Specifically, a picture is created following input of data in the i-th step of ordinary automatic programming and the picture is displayed on the CRT for a predetermined time.

(h) The processor 104 executes parity check processing at all times with respect to data read out of the ROM 105 or RAM 106 and checks whether a parity error has occurred.

(i) If a parity error occurs, the processor 104 displays the parity error, as shown in Fig. 7, and immediately halts diagnostic processing. Thereafter, the memory which has developed the parity error is replaced by a new memory, followed by the execution of automatic programming processing. Note that Fig. 7 is an example of a display in a case where a parity error has been found in data read out of the RAM. If data read out of the ROM has a parity error, "ROM PARITY ERROR" will be displayed on the CRT.

(j) If no parity error occurs, the processor 104 checks whether display time t has exceeded a preset time Ts. If t<Ts holds, display of the picture continues.

(k) When $t \geq Ts$ holds, however, the processor checks whether the pictures for all steps have been displayed; if they have, processing is ended with the final picture being left displayed. This is taken as meaning that the memory has not developed a fault.

(m) If the display of all pictures has not ended, the processor performs the operation $i + l \rightarrow i$ and repeats processing from step (g) onward.

Thus, according to the present invention as described above, groups of data entered at each step of automatic programming are stored beforehand as a family program for diagnosis, an automatic advance command is entered, pictures associated with these steps are created at predetermined times in a predetermined sequence in response to the automatic advance command by using the family program data for diagnosis, and the pictures are displayed while being changed over at predetermined times. Accordingly, a series of simulated automatic processing steps can be executed by using the diagnostic family program data without human assistance, and a parity check is performed in concurrence with this processing with respect to data read out of a RAM or ROM, thus enabling the system to be diagnosed automatically.

## Claims

1. A method of diagnosing an automatic programming system which includes ROM(105) and RAM(106) as program memory and data memory and is operable to display on a display unit (102) a predetermined sequence of pictures (2A to 2K) conforming to respective steps of a plurality of data input steps performed by an operator in response to the pictures when the system is in normal operation, the system being operable to create NC data employing the input data; wherein the diagnostic method comprises storing beforehand a data file suitable as said input data to create said NC data, entering an automatic picture advance command to select diagnostic processing, creating and displaying said pictures in accordance with said predetermined sequence automatically employing said data file, executing parity check processing for data read from said ROM(105) and RAM(106) to diagnose the memory, displaying a parity error when a parity error occurs, checking whether a picture display time t has exceeded a preset time Ts when no parity error occurs, creating and displaying the next picture in accordance with said predetermined sequence when the display time t has exceeded the preset time Ts, and executing the parity check processing repeatedly for the succession of displayed pictures.

2. A method of diagnosing according to claim 1, wherein a parity error is displayed on a display screen (102) in a case where a parity error occurs.

## Revendications

1. Un procédé de diagnostic d'un système de programmation automatique qui comporte une ROM (105) et une RAM (106) comme mémoire de programme et mémoire de données et peut fonctionner pour afficher sur une unité de visualisation (102) une séquence prédéterminée d'images (2A à 2K) concernant les étapes respectives d'une pluralité d'étapes d'entrée de données exécutées par un opérateur en réponse aux images quand le système est dans un fonctionnement normal, le système pouvant fonctionner de façon à créer des données de CN en utilisant les données entrées ; dans lequel le procédé de diagnostic comporte le stockage préalable d'un fichier de données convenable comme données d'entrée pour créer lesdites données CN, la saisie d'une commande d'envoi automatique d'image pour sélectionner un traitement de diagnostic, la création et la visualisation desdites images selon ladite séquence sélectionner le traitement de diagnostic, la création et la visualisation desdites images selon ladite séquence prédéterminée automatiquement en utilisant ledit fichier de données, l'exécution d'un traitement de vérification de parité pour les données lues sur lesdites ROM (105) et RAM (106) pour tester la mémoire, la visualisation d'une erreur de parité si une erreur de parité apparaît, la vérification si une durée d'affichage d'image t a dépassé une durée prédéterminée Ts, quand aucune erreur de parité n'est apparue, la création et l'affichage de l'image suivante selon ladite séquence prédéterminée quand le temps d'affichage t a dépassé le temps prédéterminé Ts, et l'exécution du traitement de vérification de parité de façon répétée pour la succession d'images affichées.

2. Un procédé de diagnostic selon la revendication 1, dans lequel une erreur de parité est affichée sur un écran de visualisation (102) dans un cas où une erreur de parité survient.

## Patentansprüche

1. Verfahren zum Diagnostizieren eines automatischen Programmiersystems, das einen Nur-Lese-Speicher ROM (105) und einen Speicher mit wahlfreiem Zugriff RAM (106) als Programmspeicher und Datenspeicher enthält und betreibbar ist, um auf dem Bildschirm einer Anzeigeeinheit (102) eine vorbestimmte Folge von Bildern (2A bis 2K) in Übereinstimmung mit betreffenden Schritten einer Vielzahl von Dateneingabeschritten anzuzeigen, die durch eine Bedienungsperson in Reaktion auf die Bilder durchgeführt werden, wenn sich das System in einem normalen Betriebszustand befindet, welches System betreibbar ist, um NC-Daten unter Verwendung der eingegebenen Daten zu erzeugen, wobei das Verfahren zum Diagnostizieren Schritte umfaßt zum

Vorabspeichern einer Datei, die als die eingegebenen Daten geeignet ist, zum Erzeugen der NC-Daten,

Eingeben eines Befehls zum automatischen Bildfortbewegen, um eine Diagnostizierungsverarbeitung auszuwählen.

Erzeugen und Anzeigen der Bilder in Übereinstimmung mit der vorbestimmten Folge, das automatisch die Datei verwendet,

Ausführen einer Paritätsprüfungsverarbeitung für Daten, die aus dem ROM (105) und dem RAM (106) ausgelesen sind, um den Speicher zu diagnostizieren,

Anzeigen eines Paritätsfehlers, wenn ein Paritätsfehler auftritt,

Prüfen, ob eine Bildanzeigezeit t eine voreingestellte Zeit Ts überschritten hat, wenn kein Paritätsfehler auftritt,

Erzeugen und Anzeigen des nächsten Bildes in Übereinstimmung mit der vorbestimmten Folge, wenn die Anzeigezeit die voreingestellte Zeit Ts überschritten hat, und

wiederholten Ausführen der Paritätsprüfungsverarbeitung für die Aufeinanderfolge der angezeigten Bilder.

2. Verfahren zum Diagnostizieren nach Anspruch 1, bei dem ein Paritätsfehler auf einem Anzeigebildschirm (102) in einem Fall angezeigt wird, in dem ein Paritätsfehler auftritt.

# Fig. I

```
                    ┌──────────┐
                    │  Start   │
                    └──────────┘
                         │
    ┌────────────────────────────────────────┐
    │  Select Job  ( i = I )                  │
    └────────────────────────────────────────┘
                         │
    ┌────────────────────────────────────────┐
    │  Select and Designate Material          │
    │                          ( i = 2 )      │
    └────────────────────────────────────────┘
                         │
    ┌────────────────────────────────────────┐
    │  Select and Designate Drawing           │
    │                  Format ( i = 3 )       │
    └────────────────────────────────────────┘
                         │
    ┌────────────────────────────────────────┐
    │  Select and Designate Blank Profile     │
    │                          ( i = 4 )      │
    └────────────────────────────────────────┘
                         │
    ┌────────────────────────────────────────┐
    │  Enter Part Profile and Dimensions      │
    │                          ( i = 5 )      │
    └────────────────────────────────────────┘
                         │
    ┌────────────────────────────────────────┐
    │  Enter Machine Reference Point and      │
    │  Turret Position  ( i = 6 )             │
    └────────────────────────────────────────┘
                         │
    ┌────────────────────────────────────────┐
    │  Select Machining Process  ( i = 7 )    │
    └────────────────────────────────────────┘
                         │
    ┌────────────────────────────────────────┐
    │  Select Tool and Enter Tool Data        │
    │                          ( i = 8 )      │
    └────────────────────────────────────────┘
                         │
    ┌────────────────────────────────────────┐
    │  Enter Machining Starting Position      │
    │                          ( i = 9 )      │
    └────────────────────────────────────────┘
                         │
    ┌────────────────────────────────────────┐
    │  Verify Cutting Conditions  ( i = IO )  │
    └────────────────────────────────────────┘
                         │
    ┌────────────────────────────────────────┐
    │  Select Cutting Direction  ( i = I I )  │
    └────────────────────────────────────────┘
                         │
    ┌────────────────────────────────────────┐
    │  Designate Cutting Limits( i = I2 )     │
    └────────────────────────────────────────┘
                         │
    ┌────────────────────────────────────────┐
    │  Display Tool Path and ExecuteNC        │
    │  Data Creation  ( i = I3 )              │
    └────────────────────────────────────────┘
                         │
                    ┌──────────┐
                    │   End    │
                    └──────────┘
```

*Fig. 2 (A)*

Symbolic

FAPT Turn

Press R Key

RO ; FAPT Excute
R I ; Family Program
R 2 ; Set
R 3 ; Auxiliary Job

*Fig. 2 (B)*

=·=FAPT=·=

1. Blank and Part ( Drawing and Blank )
2. Blank and Part ( Part Profile )
3. Machine Reference Point and Turret Position
4. Machining Definition
5. NC Data Creation

0. End

No. = 1

*Fig. 2 (C)*

☆☆☆ Blank and Part ☆☆☆ Material

| No. | Examples of Material |
|-----|----------------------|
| 1 | S45C |
| 2 | SCM |
| 3 | FC |
| 4 | AL |
| 5 | SUS |
| 6 | Material 6 |
| 7 | Material 7 |
| ⋮ | ⋮ |

Material No. = 4

## Fig. 2(D)

## Fig. 2(E)

## Fig. 2(F)

8

**Fig. 2 (G)**

☆☆☆ Machine Reference ☆☆☆   Machine
Point and Turret Position   Reference Point

Machine
Reference Point
DXH=
ZH  =

**Fig. 2 (H)**

☆☆☆Machining ☆☆☆    Type of Machining
Definition

Process 1. Center Boring

Tipe of Process - - - - Process 01=

1. Center Boring               7. Inner Diameter Finishing
2. Drilling                    8. Outer Diameter Finishing
3. Outer Diameter              9. End Face Rough Cutting
   Rough Cutting
4. Inner Diameter             10. Grooving
   Rough Cutting
5. Outer Diameter             11. Thread Cutting
   Intermediate Finishing
6. Inner Diameter             12. End Face Finishing
   Intermediate Finishing

**Fig. 2 (I)**

☆☆☆ Machining ☆☆☆ Tool Data
Definition
Process 01  Outer Diameter
Rough Cutting  T  X  Z

Tool Data ( T Code )
Tool No. - - - - - - - - - - - - - - - - TN=
Tool Position Correction No.-- TM=

TN=

9

EP 0 189 487 B1

## Fig. 2 (J)

☆ ☆ ☆ Machining Definition ☆ ☆ ☆

+X

+Z

Cutting Conditions

Clearance Quantity---$CX=2$
$CZ=2$

Finishing Tolerance
---$TX=1$, $TZ=1$

Depth of Cut---$D=5$

Back-up Quantity
---$U=1$

Cutting Velocity-$V=14.5$

Feedrate ---$F1=0.65$
$F2=0.32$
$F3=0.21$

## Fig. 2 (K)

☆ ☆ ☆ Machining ☆ ☆ ☆    Cutting Direction
Definition

+X

+Z

Cutting Direction --- CD = ⟵

↓ X Axis Negative Direction
↑ X Axis Positive Direction
⟵ Z Axis Negative Direction
⟶ Z Axis Positive Direction

CD =

10

*Fig. 3*

ROM 105
RAM 106
Operator's Panel 103
Graphic Display Unit 102
Processor 104
*i*
Non-Volatile Memorry 101
NC Data Output Unit 107
External Storage Medium 108

EP 0 189 487 B1

# Fig. 4

```
                    ┌──────────┐
                    │  Start   │
                    └────┬─────┘
                         │
        ┌────────────────────────────────┐
        │  Introduce Electric Power      │  (a)
        └────────────────┬───────────────┘
                         │
        ┌────────────────────────────────┐
        │  Select "Family Program" Item  │
        │  By Referring to Initial       │  (b)
        │                      Picture   │
        └────────────────┬───────────────┘
                         │
        ┌────────────────────────────────┐
        │  Display "Family Program" Picture │  (c)
        └────────────────┬───────────────┘
                         │
        ┌────────────────────────────────┐
        │  Enter Name of Diagnostic      │  (d)
        │             Family Program     │
        └────────────────┬───────────────┘
                         │
        ┌────────────────────────────────┐
        │  Enter Automatic Advance       │  (e)
        │                     Command    │
        └────────────────┬───────────────┘
                         │
                  ┌──────────────┐
                  │   I → i      │  (f)
                  └──────┬───────┘
                         │
        ┌────────────────────────────────┐
        │  Create and Display Picture    │
        │  Using Data in i-th            │  (g)
        │                     Step       │
        └────────────────┬───────────────┘
                         │
                  Parity Error ?  (h) ──YES──┐
                         │NO                  │
        (m)       t ≥ Ts  (j)                 │
   i + I → i   ──NO─────                      │
              ( t < Ts )   │YES               │
                         All Pictures  (k)    │
                 ──NO──   Displayed ?         │
                         │YES                 │
                                        ┌──────────────┐
                                        │ Display Error│  (i)
                                        └──────┬───────┘
                         │                     │
                  ┌──────────────┐             │
                  │    End       │◄────────────┘
                  └──────────────┘
```

**Fig.5**

=·= Family Program =·=

1.  Family        Program        Output

2.  Family        Program        Input

0.  End

**Fig.6**

=·= Auxiliary Job =·=

Request =

**Fig.7**

RAM    Parity Error